# FASCICULE DE BREVET EUROPEEN

(11) **EP 1 137 603 B1**
(45) Date de publication et mention de la délivrance du brevet: **02.05.2003**
(21) Numéro de dépôt: 99973006.2
(22) Date de dépôt: 01.12.1999
(51) Int. Cl.: C03B 5/00, C03B 3/00, C03B 5/02, G21F 9/00, C03B 5/027

(54) **PROCEDE ET DISPOSITIF D'INCINERATION ET DE VITRIFICATION DE DECHETS, NOTAMMENT RADIOACTIFS**
VERFAHREN UND VORRICHTUNG ZUM VERBRENNEN UND VERGLASEN VON ABFAELLEN, INSBESONDERE RADIOAKTIVEN ABFAELLEN
METHOD AND DEVICE FOR INCINERATION AND VITRIFICATION OF WASTE, IN PARTICULAR RADIOACTIVE WASTE

(30) Priorité: 01.12.1998 KR 0502360; 01.12.1998 KR 0502361
(43) Date de publication de la demande: 04.10.2001
(73) Titulaire: SOCIETE GENERALE POUR LES TECHNIQUES NOUVELLES S.G.N., 78182 Saint-Quentin-en-Yvelines Cédex (FR); Korea Hydro & Nuclear Power Company, Seoul 135-791 (KR)
(72) Inventeur: BRUNELOT, Pierre, F-33700 Mérignac (FR); LACOMBE, Jacques, F-30131 Pujaut (FR); MERLIN, Serge, F-91430 Igny (FR); ROUX, Patrice, F-75015 Paris (FR); THIEBAUT, Valérie, F-30150 Roquemaure (FR); CHOI, Kwan-Sik, 305-390 Taejon (KR); SONG, Myung-Jae, Junmin-dong, Yusung-ku, 305-333 Taejon (KR)
(74) Mandataire: Le Roux, Martine
(86) Numéro de dépôt international: FR9902977
(87) Numéro de publication internationale: WO00032524

(56) Documents cités:
- EP-A- 0 647 598
- WO-A-95/04004
- DE-C- 4 446 576
- US-A- 3 607 171
- US-A- 5 643 350

## Description

La présente invention a pour objet un procédé et un dispositif d'incinération et de vitrification de déchets, notamment radioactifs.

Ladite invention s'inscrit dans le cadre du traitement de déchets combustibles dangereux, dont il convient d'immobiliser de façon stable les cendres. On a longtemps procédé, pour la neutralisation de ce type de déchets, en deux étapes, chacune desdites étapes étant mise en oeuvre dans un dispositif indépendant :
- une première étape d'incinération desdits déchets organiques, solides divisés et/ou liquides, dans un dispositif d'incinération ;
- une seconde étape d'immobilisation des cendres récupérées à l'issue de ladite première étape, ladite seconde étape étant mise en oeuvre dans un dispositif adéquat qui renferme un bain de verre maintenu à l'état fondu.

Depuis quelques années toutefois, des procédés de traitement de déchets ont été décrits, selon lesquels lesdites deux étapes d'incinération desdits déchets et d'immobilisation des cendres résultantes ont été mises en oeuvre dans un même et unique dispositif. On parle, dans ce contexte, de vitrification directe.

Des résultats obtenus dans ledit contexte par les Demanderesses ont notamment été présentés au KAIF' 98, le "Korean Atomic Industrial Forum" qui s'est tenu du 14 au 17 avril 1998 à Séoul, en Corée du Sud. Lesdits résultats ont démontré la faisabilité d'un procédé de vitrification directe, selon lequel les déchets sont principalement brûlés à la surface d'un bain de verre fondu, en atmosphère oxydante, les cendres générées étant piégées et immobilisées dans ledit bain de verre fondu ; ledit procédé étant mis en oeuvre dans un creuset froid, ledit bain de verre fondu étant chauffé par induction.

Les Demanderesses, en poursuivant leurs travaux sur la vitrification directe, ont conçu et développé la présente invention, qui s'analyse comme un perfectionnement à ladite vitrification directe, telle que connue à ce jour. Le perfectionnement, qui constitue le principal objet de la présente invention, s'analyse tant en termes de procédé que de dispositif et intervient au niveau de la qualité du bain de verre. Ledit perfectionnement que l'on peut qualifier, pour la clarté du présent exposé, de perfectionnement principal, est avantageusement mis en oeuvre avec d'autres perfectionnements que l'on peut qualifier, dans le même esprit, de perfectionnements secondaires. Lesdits perfectionnements, principal et secondaires sont ci-après décrits, en termes généraux puis, de façon plus détaillée, en référence aux figures annexées.

Dans la demande DE-C14 446 576, on a décrit la vitrification de déchets non combustibles. Du gaz oxydant est introduit dans le bain de vitrification. Les moyens d'introduction ne pénètrent pas dans ledit bain.

Selon son premier objet, la présente invention concerne donc un procédé de traitement de déchets organiques (donc combustibles), solides divisés (pour faciliter leur introduction et leur combustion) et/ou liquides, mis en oeuvre dans un unique réacteur renfermant un bain de verre fondu surmonté d'une phase gazeuse ; ledit procédé de traitement comprenant : l'incinération, en présence d'oxygène, desdits déchets à la surface dudit bain de verre fondu (lesdits déchets tombent à ladite surface, s'y décomposent et les produits gazeux qui résultent de cette décomposition sont brûlés dans ladite phase gazeuse oxygénée), et la vitrification desdits déchets incinérés dans ledit bain de verre fondu. En cela, le procédé de l'invention est un procédé de vitrification directe.

De façon caractéristique, ledit procédé comprend en outre l'injection d'oxygène dans ledit bain de verre fondu, en une quantité suffisante pour minimiser voire éviter la formation de métal au sein dudit bain de verre ; avantageusement, pour aussi assurer une agitation modérée dudit bain de verre. Les moyens intervenant pour ladite injection sont refroidis et disposés verticalement, traversant le fond dudit réacteur et présentant une embouchure à 90° de leur axe vertical, de sorte qu'à l'arrêt de ladite injection, il ne se constitue pas, à leur extrémité débouchante, un bouchon de verre.

Ledit oxygène, introduit, de façon originale, dans le bain de verre fondu, est introduit dans le réacteur de traitement, en sus de celui-ci, délivré classiquement à titre de comburant dans la phase gazeuse surmontant ledit bain, destiné à assurer l'incinération des déchets.

De façon caractéristique, dans le cadre du procédé de l'invention, il intervient outre ledit comburant dans la phase gazeuse, de l'oxygène au sein du bain de verre ; ledit oxygène permettant d'ajuster le potentiel d'oxydo-réduction dudit bain de verre (permettant de limiter le caractère réducteur du verre).

En maîtrisant ainsi le potentiel d'oxydo-réduction du bain de verre, on peut éviter, au sein dudit bain de verre, la réduction d'oxydes et donc la formation de métaux. La présence de ces métaux, au sein dudit bain, nuit fortement à l'homogénéité dudit bain, et donc à la qualité de la vitrification mise en oeuvre. De surcroît, cette présence est susceptible de soulever de réelles difficultés lors de la mise en oeuvre d'un chauffage par induction...

L'oxygène injecté dans le bain de verre pour minimiser, voire éviter la formation de métal l'est avantageusement en une quantité suffisante pour également assurer une certaine agitation dudit bain de verre. L'homme du métier est à même d'optimiser la quantité d'oxygène nécessaire à ces fins. En tout état de cause, celle-ci doit être suffisante pour l'obtention de l'effet escompté quant à la valeur du potentiel d'oxydo-réduction, voire des effets escomptés quant à la valeur dudit potentiel et quant à l'effet d'agitation recherché mais ne doit pas être excessive dans la mesure où le bain de verre, certes agité, brassé, doit rester un bain de verre et non pas se transformer en une mousse....

On a parlé d'oxygène, intervenant à titre de comburant dans la phase gazeuse et à titre de gaz oxydant dans le bain de verre, ceci dans la mesure où ledit oxygène intervient généralement, à titre de gaz "pur". Il ne saurait toutefois être totalement exclu du cadre de l'invention l'intervention d'un gaz, renfermant de l'oxygène et notamment l'intervention d'air enrichi ou non en oxygène, tant à titre de comburant qu'à titre de gaz oxydant.

Pour ce qui concerne l'oxygène, délivré à titre de comburant dans la phase gazeuse, il intervient avantageusement, pour une optimisation de l'incinération en cause, en une quantité supérieure à la quantité stoechiométrique, théoriquement requise. Il intervient avantageusement en une quantité correspondant à 1,25 à 1,5 fois ladite quantité stoechiométrique. Ladite quantité est, en tout état de cause, contrôlée et n'affecte pas la dépression, maintenue dans le réacteur, de façon classique, pour des raisons évidentes de sécurité. Ladite dépression est entretenue par une aspiration des gaz de combustion, aspiration mise en oeuvre dans des conditions telles que l'entraînement des déchets et surtout des cendres est minimisé.

Le principe du perfectionnement principal, apporté selon l'invention au procédé de vitrification directe, étant posé (c'est-à-dire celui de l'injection d'oxygène dans le bain de verre), sa mise en oeuvre peut se décliner selon différentes variantes, dans des contextes quelque peu différents.

On peut notamment mettre en oeuvre le procédé de l'invention avec un bain de verre quasiment pré-constitué (présent dans le réacteur, avant l'introduction des déchets) ou avec un bain de verre qui se constitue au fur et à mesure à partir d'une charge initiale minimale. Dans le cadre de cette seconde variante, préférée, le réacteur contient au démarrage un bain de verre initial de faible volume (un fond) et il est ensuite alimenté, d'une part en déchets, d'autre part en éléments constitutifs d'un bain de verre. Lesdits déchets et lesdits éléments constitutifs sont d'ailleurs avantageusement introduits en mélange... les déchets pouvant en fait être assimilés à des précurseurs d'éléments constitutifs dudit bain de verre. Le réacteur est ainsi alimenté en continu avec des déchets et avec des éléments constitutifs du bain de verre, voire des additifs auxdits éléments. Lorsqu'un certain niveau est atteint, on arrête les deux types d'alimentation et on peut vidanger le bain de verre ainsi constitué.

Dans le procédé de l'invention, l'oxygène, injecté dans le bain de verre, est introduit dans le réacteur en dessous de la surface dudit bain de verre. Ainsi, les moyens d'injection dudit oxygène ne traversent-ils pas la phase gazeuse dudit réacteur, n'ont-ils à subir qu'un type de corrosion : celle inhérente audit bain de verre.

Ce type de remarque s'applique à tout dispositif destiné à pénétrer dans ledit bain de verre pour y délivrer un élément quelconque (on vient d'invoquer l'injection d'oxygène) ou pour y mesurer un paramètre quelconque (tel que la température, le potentiel d'oxydo-réduction...). Ainsi, tout dispositif destiné à pénétrer dans ledit bain de verre est-il avantageusement introduit dans le réacteur en dessous de la surface dudit bain de verre, de façon à éviter tout contact avec la phase gazeuse.

On en vient maintenant à la description générale, en termes de procédé, des perfectionnements secondaires de la présente invention.

Le procédé de l'invention, qui comprend l'injection d'oxygène dans le bain de verre, est avantageusement mis en oeuvre avec refroidissement des parois du réacteur et/ou, de préférence et, des moyens introduits dans ledit réacteur, tant au niveau de ladite phase gazeuse que du bain de verre, moyens introduits pour notamment l'alimentation dudit réacteur en les déchets à incinérer et vitrifier, l'alimentation de celui-ci en oxygène, tant au niveau de sa phase gazeuse (ledit oxygène intervenant à titre de comburant) que du bain de verre (ledit oxygène intervenant alors à titre d'oxydant pour ajuster le potentiel d'oxydo-réduction dudit bain de verre et avantageusement à titre de moyen d'agitation).

Cette liste des moyens, à refroidir avantageusement, n'est pas limitative. On peut y adjoindre, à titre illustratif, des moyens pour mesurer la température de la phase gazeuse, des moyens pour mesurer la température du bain de verre, des moyens pour mesurer le potentiel d'oxydo-réduction dudit bain de verre, des moyens de mesure du niveau dudit bain de verre ...

Un tel refroidissement est destiné avant tout à protéger lesdites parois et lesdits moyens de la corrosion. Il est également opportun pour préserver les dispositifs d'étanchéité installés au niveau des traversées desdites parois.

Dans la structure du dispositif d'alimentation du réacteur en les déchets, on met avantageusement en oeuvre un double refroidissement :
- un premier refroidissement de ce dispositif côté phase gazeuse (côté face externe) ;
- un second refroidissement de ce même dispositif, généralement indépendant du premier, côté arrivée desdits déchets (côté face interne).

Le premier desdits refroidissements est avant tout destiné à protéger ledit dispositif de la corrosion, développée par la phase gazeuse à son contact ; le second desdits refroidissements est avant tout destiné à minimiser les calories transférées aux déchets arrivants, ce dans le but de minimiser la vaporisation des déchets liquides, d'éviter le collage des déchets solides, collage susceptible d'entraîner le bouchage dudit dispositif d'alimentation.

Pour la mise en oeuvre du refroidissement au niveau des parois du réacteur et des différents moyens introduits dans ledit réacteur, on fait classiquement appel à des fluides caloporteurs, généralement à des liquides caloporteurs. En fait, on adjoint auxdites parois et auxdits moyens, des circuits de circulation de tels fluides. Selon une variante de mise en oeuvre particulièrement préférée dudit refroidissement, il est prévu, au moins dans les parois au contact de la phase gazeuse et/ou au moins dans les moyens introduits dans le réacteur au contact de ladite phase gazeuse, une circulation d'au moins un fluide caloporteur, ledit fluide étant maintenu à une température supérieure au point de rosée de ladite phase gazeuse. Dans le cadre de cette variante avantageuse, on vise à éviter toute condensation de ladite phase gazeuse sur lesdites parois et sur les surfaces externes desdits moyens. Ce phénomène de condensation est évidemment néfaste, en référence aux problèmes de corrosion. Il est par ailleurs susceptible, de générer des arcs électriques, donc de poser de sérieux problèmes, lors de la mise en oeuvre d'un chauffage du bain de verre par induction. Dans le cadre de cette variante avantageuse, on peut notamment utiliser à titre de fluide caloporteur "chaud", de l'eau surchauffée.

Le double refroidissement, évoqué ci-dessus, mis en oeuvre avantageusement au sein du dispositif d'alimentation en déchets du réacteur est, selon une variante particulièrement préférée, mis en oeuvre avec un tel fluide "chaud" (qui présente une température supérieure au point de rosée de la phase gazeuse traversée), au moins pour ce qui concerne le refroidissement dudit dispositif, côté phase gazeuse (le premier des refroidissements, évoqué ci-dessus). Pour ce qui concerne le second desdits refroidissements, côté arrivée des déchets, l'intervention d'un tel fluide de refroidissement "chaud" ne peut bien évidemment être envisagée qu'avec des déchets susceptibles de supporter la température d'un tel fluide "chaud"... Généralement, le second desdits refroidissement est mis en oeuvre avec un fluide "froid", tel de l'eau à la température ambiante.

Dans le cadre du procédé de l'invention, pour le chauffage et maintien du bain de verre fondu à la température adéquate, il peut être fait appel à diverses techniques. Ledit bain de verre peut ainsi être chauffé, par induction, à la flamme, à la torche plasma ou au moyen d'électrodes plongeantes. Il n'est pas exclu d'utiliser plusieurs desdites techniques, en combinaison. Le chauffage par induction est préféré ; le chauffage par induction, mis en oeuvre en creuset froid est tout particulièrement préféré.

Le procédé de l'invention, tel que décrit ci-dessus ainsi que ci-après, en référence aux figures annexées, convient tout particulièrement pour le traitement - la vitrification directe - de déchets radioactifs.

Ledit procédé de l'invention est généralement mis en oeuvre avec une alimentation en continu des déchets ; lesdits déchets étant introduits au dessus de la surface du bain de verre, éventuellement en mélange avec des éléments constitutifs dudit bain de verre. A l'issue de l'incinération d'une charge et de la digestion des cendres générées dans le bain de verre, ledit bain de verre chargé est vidangé. On a donc généralement une alimentation en continu (une constitution de la charge en continu) et une vidange en discontinu.

On peut encore noter, pour ce qui concerne la mise en oeuvre du procédé de l'invention, ce qui suit.

L'alimentation du réacteur en les déchets et en l'oxygène est évidemment avantageusement optimisée pour assurer une combustion maximale desdits déchets et un entraînement minimal desdits déchets, brûlés ou pas, par les gaz de combustion. Cette optimisation repose sur la maîtrise , conjuguée, de nombreux paramètres, certains ayant déjà été évoqués, et notamment par la maîtrise :
- de la taille desdits déchets,
- de la quantité d'oxygène délivrée,
- du niveau d'introduction des déchets par rapport à la surface du bain de verre (on prévoit avantageusement de régler le niveau d'introduction desdits déchets par un réglage de la profondeur d'introduction du dispositif d'alimentation en lesdits déchets du réacteur),
- de la qualité du mélange déchets/oxygène, à l'introduction desdits déchets. On introduit avantageusement lesdits déchets, cernés par de l'oxygène. On fait avantageusement intervenir à cette fin, dans la structure du dispositif d'alimentation en lesdits déchets, au moins un circuit d'amenée d'oxygène.

On se propose d'aborder maintenant, en termes généraux, le deuxième objet de la présente invention, à savoir un dispositif de traitement, par incinération et vitrification, de déchets organiques, solides divisés et/ou liquides ; dispositif convenant à la mise en oeuvre du procédé décrit ci-dessus. Ledit dispositif comprend, de façon classique, un réacteur, d'une part associé à des moyens de chauffage, aptes à maintenir dans le fond dudit réacteur un bain de verre fondu et d'autre part équipé des moyens ci-après :
- de moyens de vidange dudit bain de verre fondu,
- d'un dispositif d'alimentation en les déchets à incinérer et vitrifier, ledit dispositif débouchant au-dessus de la surface dudit bain de verre fondu et sa profondeur d'introduction dans ledit réacteur étant avantageusement réglable ;
- de moyens d'alimentation en oxygène, délivrant ledit oxygène au-dessus de la surface dudit bain de verre fondu (pour la mise en oeuvre de l'incinération) ;
- d'au moins une sortie des gaz de combustion, ménagée, dans la partie haute dudit réacteur, bien au-dessus de la surface dudit bain de verre fondu (on vise à minimiser l'entraînement des cendres).

Ledit dispositif, de façon caractéristique, est équipé en outre de moyens pour injecter de l'oxygène dans ledit bain de verre fondu.

Lesdits moyens sont introduits dans la partie basse du réacteur, en dessous de la surface du bain de verre de sorte qu'ils ne contactent pas la phase gazeuse, qu'ils ne subissent qu'un type de corrosion (celle développée par le bain de verre).

Lesdits moyens sont également agencés de sorte qu'à l'arrêt de leur alimentation en oxygène, il ne se constitue pas, à leur extrémité débouchante, un bouchon de verre. Ainsi, lesdits moyens pour injecter de l'oxygène dans ledit bain de verre sont-ils disposés verticalement, au travers du fond (de la sole inférieure) du réacteur, avec une embouchure, disposée à 90° de leur axe vertical. Lesdits moyens incluent aussi dans leur structure au moins un circuit de circulation d'un fluide caloporteur.

Les éléments essentiels du dispositif de l'invention, nécessaires à la mise en oeuvre du procédé d'incinération et de vitrification visé, sont ceux mentionnés ci-dessus. Il peut s'adjoindre auxdits éléments d'autres éléments, tels des moyens pour mesurer la température de la phase gazeuse, des moyens pour mesurer la température du bain de verre fondu, des moyens pour mesurer le niveau dudit bain de verre, des moyens pour mesurer le potentiel d'oxydo-réduction dudit bain de verre fondu....

On a vu que, de manière générale, tous les moyens introduits dans ledit réacteur (dans la phase gazeuse et le bain de verre) sont avantageusement refroidis. Ainsi, selon une variante avantageuse de réalisation du dispositif de l'invention, tous lesdits moyens introduits dans le réacteur, notamment le dispositif d'alimentation dudit réacteur en les déchets, les moyens d'alimentation en oxygène de la phase gazeuse, les moyens d'injection d'oxygène dans ledit bain de verre, incluent dans leur structure, au moins un circuit de circulation d'un fluide caloporteur. Ledit dispositif d'alimentation dudit réacteur en lesdits déchets inclut, lui, avantageusement dans sa masse, au moins deux circuits généralement indépendants de ce type, au moins un pour assurer le refroidissement de sa masse et de sa surface externe (en vue de minimiser les problèmes de corrosion) et au moins un autre pour assurer le refroidissement de sa surface interne (en vue de transférer le minimum de calories aux déchets arrivants). Ledit dispositif d'alimentation présente généralement une structure tubulaire, délimitée par une surface externe et une surface interne.

En référence audit dispositif d'alimentation, on peut encore ajouter ce qui suit. Il inclut également avantageusement dans sa structure des moyens pour véhiculer et délivrer en son extrémité débouchante (au-dessus du bain de verre) de l'oxygène. La délivrance dudit oxygène peut notamment être assurée à partir d'un tore, agencé autour de l'extrémité débouchante dudit dispositif, ledit tore étant percé d'orifices adéquats judicieusement répartis. Le contact déchets/oxygène (comburant) peut ainsi être optimisé.

Les entrées et sorties des fluides caloporteurs, mis avantageusement en circulation dans la structure du dispositif d'alimentation en déchets du réacteur ainsi que l'entrée de l'oxygène, mis également avantageusement en circulation dans ladite structure, sont raccordées à des unités de distribution et d'évacuation adéquates. La répartition desdits fluides et dudit oxygène, dans leur circuit(s) de circulation respectif(s), à l'intérieur dudit dispositif d'alimentation, est avantageusement effectuée au moyen d'un ensemble de chambres et canaux de répartition, judicieusement agencés.

De manière avantageuse, le réacteur est également refroidi. Ses parois sont avantageusement du type double enveloppe, pour permettre la circulation d'un fluide caloporteur.

Les moyens de chauffage associés audit réacteur peuvent être de différents types et notamment convenir pour la mise en oeuvre d'un chauffage par induction, à la flamme, à la torche plasma ou au moyen d'électrodes plongeantes. Selon une variante de réalisation particulièrement préférée, le réacteur utilisé est un creuset froid et lesdits moyens de chauffage sont des moyens de chauffage par induction.

On se propose maintenant de décrire l'invention sous ses aspects procédé et dispositif en référence aux figures annexées.

La figure 1 est une vue schématique de fonctionnement d'un dispositif de l'invention.

La figure 2 est une vue en coupe, plus détaillée, d'un dispositif de même type.

La figure 3 est une vue en coupe, détaillée, des moyens d'injection d'oxygène dans le bain de verre.

La figure 4 est une vue en coupe, détaillée, du dispositif d'alimentation en déchets.

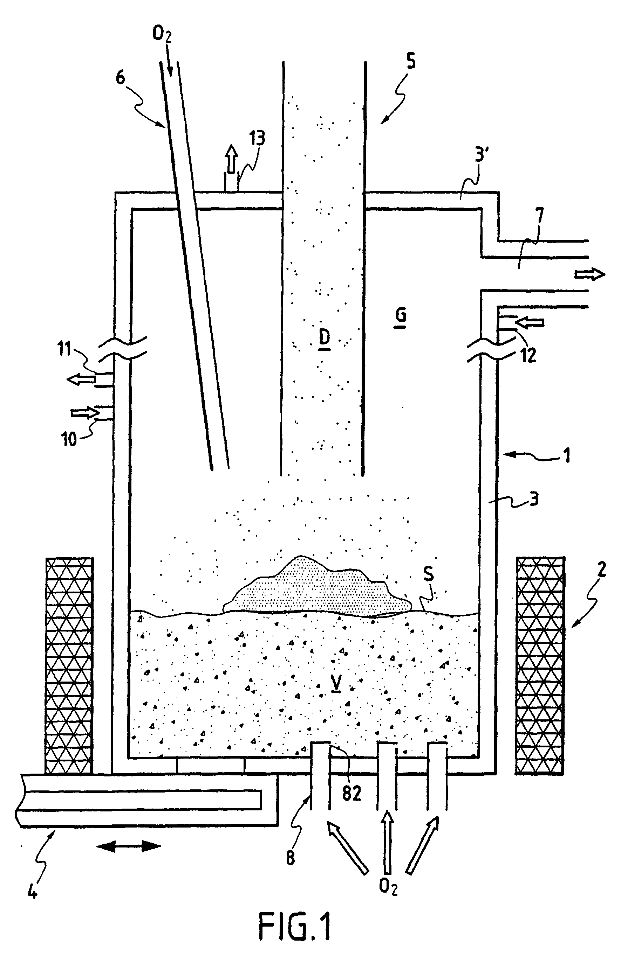

Sur lesdites figures 1 à 4, on a utilisé les mêmes références pour désigner les mêmes éléments, de façon schématique ou détaillée.

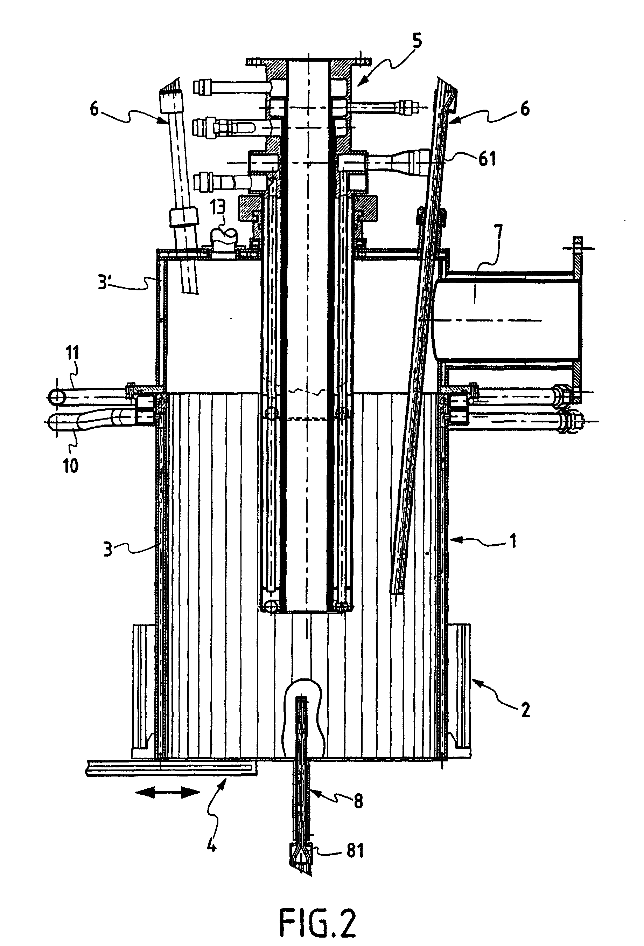

Le dispositif de l'invention qui convient pour traiter - par incinération et vitrification, par vitrification directe - des déchets D, comprend un réacteur 1 associé à des moyens de chauffage 2. Lesdits moyens 2 de chauffage représentés sur les figures 1 et 2 conviennent pour un chauffage par induction. Au sein dudit réacteur 1, on trouve le bain de verre fondu V, surmonté de la phase gazeuse G (figure 1).

En référence à ladite figure 1, on résume le procédé de l'invention.

Les déchets D sont amenés dans le réacteur 1 via le dispositif d'alimentation 5 en lesdits déchets D. Ils sont décomposés à la surface S du bain de verre fondu V. Les gaz résultants de cette décomposition brûlent au contact de l'oxygène, délivré principalement par les moyens 6. On a représenté sur ladite figure 1 un unique moyen 6 pour la délivrance dans la phase gazeuse dudit oxygène. Avantageusement il en intervient au moins deux, disposés de façon symétrique, par rapport audit dispositif d'alimentation 5 en lesdits déchets D. On vise ainsi à optimiser le contact déchets D/oxygène, dans le but d'optimiser la combustion desdits déchets D.

Les cendres générées tombent dans le bain de verre V. A la surface S dudit bain V, on trouve généralement un amas de déchets en cours de décomposition.

Dans la partie haute dudit réacteur 1, il a été ménagé une sortie 7 pour les gaz de combustion. En dessous du fond dudit réacteur 1, on trouve des moyens 4 pour assurer la vidange du bain de verre V. Lesdits moyens 4 sont susceptibles, alternativement, d'obturer et d'ouvrir un orifice de vidange ménagé dans le fond dudit réacteur 1.

De façon caractéristique, ledit fond dudit réacteur 1 est traversé par des moyens d'injection 8 d'oxygène dans le bain de verre V. Lesdits moyens d'injection 8 sont disposés verticalement et présentent une embouchure 82, à 90° de leur axe vertical. Il est illustré sur ladite figure 1 une variante avantageuse de mise en oeuvre du procédé de l'invention.

On a enfin montré, sur ladite figure 1, que les parois 3 et 3' dudit réacteur 1 sont du type double-enveloppe. Le réacteur 1 étant conçu en deux parties, on a référencé, 3, sa paroi dans la partie inférieure et 3', sa paroi dans la partie supérieure. Au sein de ces deux parois 3 et 3', il est prévu la circulation d'un fluide caloporteur. Pour la paroi 3, ledit fluide arrive en 10 et ressort en 11, pour la paroi 3', il arrive en 12 et ressort en 13.

Sur la figure 2, on retrouve, de façon plus détaillée, chacun des éléments référencés de la figure 1 (à l'exception de l'arrivée 12 du fluide de refroidissement, mis en circulation dans la paroi supérieure 3' du réacteur 1).

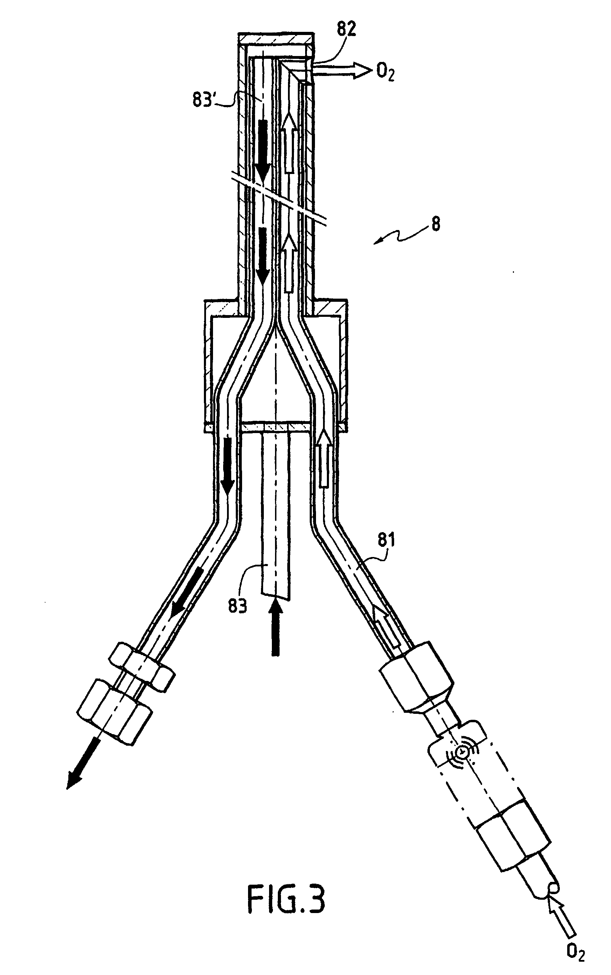

Pour une description plus détaillée des moyens 8 d'injection d'oxygène dans le bain de verre, on renvoie aux commentaires développés plus loin en référence à la figure 3.

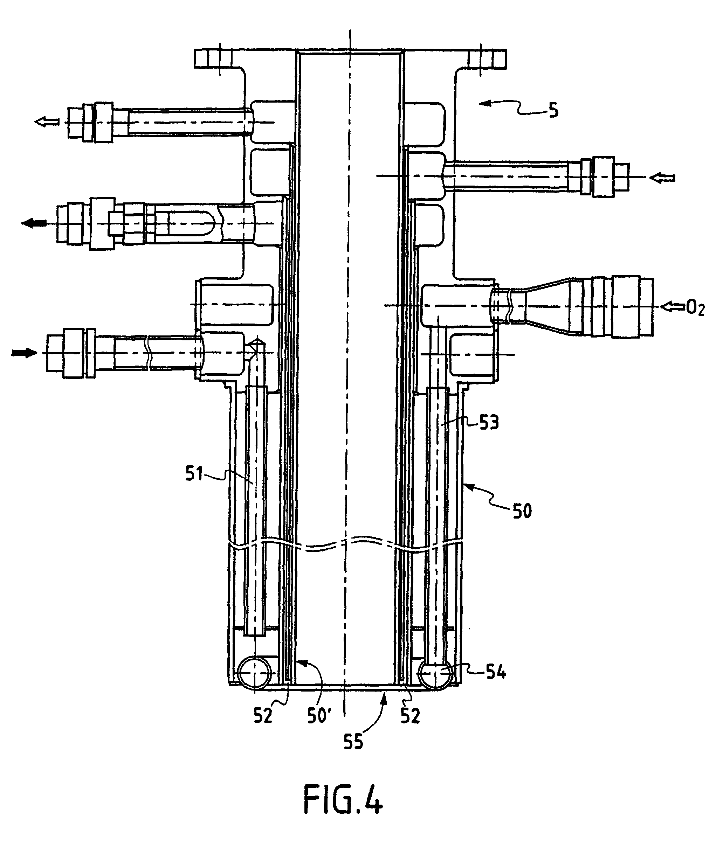

Pour une description plus détaillée du dispositif d'alimentation 5 en les déchets D, on renvoie aux commentaires développés plus loin en référence à la figure 4.

Sur ladite figure 2, on a représenté deux moyens 6, prévus pour l'alimentation en oxygène (en comburant) de la phase gazeuse. Il s'agit en fait de cannes. Au sein de la structure desdites cannes 6, il est prévu un circuit de circulation 61 d'un fluide caloporteur. Les cannes ainsi refroidies résistent mieux à la corrosion. On rappelle ici qu'elles sont avantageusement refroidies par circulation d'un fluide caloporteur "chaud" (maintenu à une température supérieure au point de rosée de la phase gazeuse traversée), pour éviter toute condensation sur leur surface externe.

Sur la figure 3, on a donc représenté un moyen 8 d'injection d'oxygène dans le bain de verre. Ledit moyen 8 comporte un circuit d'amenée 81 dudit oxygène. La circulation dudit oxygène dans ledit circuit 81 a été schématisée par les flèches blanches. L'oxygène est délivré en 82, embouchure ménagée à 90° de l'axe dudit moyen 8.

Ledit moyen 8 inclut dans sa structure un circuit de circulation 83 + 83' d'un fluide caloporteur. Sa partie qui pénètre dans le bain de verre peut ainsi être refroidie. Ledit fluide caloporteur arrive dans 83 et repart, chargé de calories en 83'. Sa circulation est schématisée par les flèches noires.

Sur la figure 4, on a enfin représenté une variante particulièrement avantageuse de réalisation du dispositif d'alimentation 5 du réacteur 1 en les déchets D. Ledit dispositif 5 présente une structure tubulaire, délimitée par une surface externe 50 et une surface interne 50'.

Dans sa masse, on trouve :
- au moins un circuit de circulation 51 pour un fluide caloporteur destiné à refroidir ladite masse et principalement ladite surface externe 50. La circulation dudit fluide caloporteur est schématisée par les flèches noires ;
- au moins un circuit de circulation 52 pour un fluide caloporteur destiné à refroidir ladite surface interne 50'. La circulation dudit fluide caloporteur est schématisée par les flèches blanches ; ainsi qu'
- au moins un circuit 53 + 54 pour véhiculer et délivrer en l'extrémité 55 dudit dispositif 5 de l'oxygène. Ledit oxygène est ainsi délivré, tout autour de ladite extrémité 55, via un tore 54. Ledit tore 54 présente des orifices de dimensions adéquates, judicieusement répartis pour délivrer ledit oxygène de façon optimisée. On optimise ainsi encore le contact déchets D/oxygène. Ledit oxygène, délivré via le dispositif d'alimentation 5 en déchets D, l'est en sus de l'oxygène délivré par les moyens 6 (voir figures 1 et 2).

On rappelle enfin ici qu'il circule avantageusement en 51 un fluide "chaud".

## Revendications

1. Procédé de traitement de déchets (D) organiques, solides divisés et/ou liquides, mis en oeuvre dans un unique réacteur (1) renfermant un bain de verre fondu (V) surmonté d'une phase gazeuse (G), comprenant l'incinération, en présence d'oxygène, desdits déchets (D), à la surface (S) dudit bain de verre fondu (V), et, la vitrification desdits déchets (D) incinérés dans ledit bain de verre fondu (V), **caractérisé en ce que**, en sus de l'oxygène ou du gaz renfermant de l'oxygène délivré à titre de comburant dans ladite phase gazeuse (G), de l'oxygène ou un gaz renfermant de l'oxygène est injecté dans ledit bain de verre fondu (V), en une quantité suffisante pour minimiser voire éviter la formation de métal au sein dudit bain de verre (V) ; avantageusement, pour aussi assurer une agitation modérée dudit bain de verre (V) ; les moyens (8) intervenant pour ladite injection étant refroidis et disposés verticalement, traversant le fond dudit réacteur (1) et présentant une embouchure (82) à 90° de leur axe vertical, de sorte qu'à l'arrêt de ladite injection, il ne se constitue pas, à leur extrémité débouchante, un bouchon de verre.

2. Procédé selon la revendication 1, **caractérisé en ce qu'**il est mis en oeuvre avec refroidissement des parois (3,3') dudit réacteur (1) et/ou des moyens (5, 6), autres que lesdits moyens (8) d'injection d'oxygène ou d'un gaz renfermant de l'oxygène dans ledit bain de verre (V), introduits dans ledit réacteur (1) au niveau de ladite phase gazeuse (G) et dudit bain de verre (V), pour notamment l'alimentation dudit réacteur (1) en lesdits déchets (D) et en comburant.

3. Procédé selon la revendication 2, **caractérisé en ce qu'**il est mis en oeuvre avec double refroidissement du dispositif d'alimentation (5) en lesdits déchets (D) dudit réacteur (1) :
- un premier refroidissement de sa masse et de sa surface externe (50), destiné à le protéger de la corrosion,
- un second refroidissement de sa surface interne (50'), destiné à minimiser les calories transférées aux déchets (D) arrivants.

4. Procédé selon l'une des revendications 2 ou 3, **caractérisé en ce que** lesdites parois (3,3') dudit réacteur (1) au contact de ladite phase gazeuse (G) et/ou lesdits moyens (5, 6) introduits dans ledit réacteur (1) au contact de ladite phase gazeuse (G) sont refroidis par circulation d'au moins un fluide caloporteur maintenu à une température supérieure au point de rosée de ladite phase gazeuse (G).

5. Procédé selon l'une quelconque des revendications 1 à 4, **caractérisé en ce que** ledit bain de verre (V) est chauffé, par induction, à la flamme, à la torche plasma ou au moyen d'électrodes plongeantes.

6. Procédé selon l'une quelconque des revendications 1 à 5, **caractérisé en ce qu'**il est mis en oeuvre dans un creuset froid chauffé par induction.

7. Procédé selon l'une quelconque des revendications 1 à 6, **caractérisé en ce qu'**il est mis en oeuvre pour le traitement de déchets radioactifs.

8. Dispositif de traitement, par incinération et vitrification, de déchets (D) organiques, solides divisés et/ou liquides, comprenant un réacteur (1) associé à des moyens de chauffage (2), aptes à maintenir dans le fond dudit réacteur (1) un bain de verre fondu (V), et équipé :
- de moyens de vidange (4) dudit bain de verre fondu (V),
- d'un dispositif d'alimentation (5) en lesdits déchets (D) à incinérer et vitrifier, ledit dispositif (5) débouchant au-dessus de la surface (S) dudit bain de verre fondu (V),
- de moyens d'alimentation (6) en oxygène ou en un gaz renfermant de l'oxygène, délivrant ledit oxygène ou ledit gaz au-dessus de la surface (S) dudit bain de verre fondu (V),
- d'au moins une sortie (7) des gaz de combustion, ménagée, dans la partie haute dudit réacteur (1), bien au-dessus de la surface (S) dudit bain de verre fondu (V),
**caractérisé en ce que** ledit réacteur (1) est en outre équipé de moyens (8) pour injecter de l'oxygène ou un gaz renfermant de l'oxygène dans ledit bain de verre fondu (V) ; lesdits moyens (8) pour injecter ledit oxygène ou ledit gaz dans ledit bain de verre fondu (V) :
- étant disposés verticalement, traversant le fond dudit réacteur (1) et présentant une embouchure (82) à 90° de leur axe vertical, de sorte qu'à l'arrêt de leur alimentation, il ne se constitue pas, à leur extrémité débouchante, un bouchon de verre ; et
- incluant dans leur structure au moins un circuit de circulation (83+83') d'un fluide caloporteur.

9. Dispositif selon la revendication 8, **caractérisé en ce que** les moyens introduits dans ledit réacteur (1), autres que lesdits moyens (8) pour injecter ledit oxygène ou ledit gaz dans ledit bain de verre fondu (V), y compris ledit dispositif d'alimentation (5) en lesdits déchets (D) et lesdits moyens d'alimentation (6) en oxygène ou en un gaz renfermant de l'oxygène, incluent, dans leur structure, au moins un circuit de circulation (51,52;61) d'un fluide caloporteur.

10. Dispositif selon la revendication 9, **caractérisé en ce que** ledit dispositif d'alimentation (5) en lesdits déchets (D) présente une structure tubulaire, délimitée par une surface externe (50) et une surface interne (50') ; ladite structure incluant dans sa masse au moins deux circuits de circulation (51 et 52) pour des fluides caloporteurs, au moins l'un (51) desdits circuits (51 et 52) étant destiné à assurer le refroidissement de ladite masse et de ladite surface externe (50) dudit dispositif d'alimentation (5), au moins un autre (52) desdits circuits (51 et 52) étant destiné à assurer le refroidissement de ladite surface interne (50') dudit dispositif d'alimentation (5).

11. Dispositif selon l'une quelconque des revendications 8 à 10, **caractérisé en ce que** les parois (3, 3') dudit réacteur (1) sont du type double enveloppe, pour permettre la circulation d'un fluide caloporteur.

12. Dispositif selon l'une quelconque des revendications 8 à 11, **caractérisé en ce que** ledit réacteur (1) est un creuset froid et **en ce que** lesdits moyens de chauffage (2) sont des moyens de chauffage par induction.

## Claims

1. A method of processing organic waste (D) in divided solid and/or liquid form, the method being implemented in a single reactor (1) containing a bath of molten glass (V) surmounted by a gas phase (G), the method comprising incinerating said waste (D) in the presence of oxygen at the surface (S) of said bath of molten glass (V), and vitrifying said incinerated waste (D) in said bath of molten glass (V), the method being **characterized in that** in addition to the oxygen or the oxygen-containing gas delivered as oxidizer into said gas phase (G), oxygen or oxygen-containing gas is injected into said bath of molten glass (V) in a quantity that is sufficient to minimize or even to avoid any formation of metal within said bath of glass (V); advantageously also to subject said bath of glass (V) to moderate stirring; the means (8) used for said injection being cooled and arranged vertically, passing through the bottom of said reactor (1) and presenting an outlet (82) at 90° to their vertical axis, so that on ceasing said injection, no plug of glass forms at their open end.

2. The method according to claim 1, **characterized in that** it is implemented with cooling of the walls (3, 3') of said reactor (1) and/or of the means (5, 6), other than said means (8) for injecting oxygen or oxygen-containing gas into said bath of glass (V), introduced into said reactor (1) in said gas phase (G) and in said bath of glass (V), in particular for feeding said reactor (1) with said waste (D) and with oxidizer.

3. The method according to claim 2, **characterized in that** it is implemented with dual cooling of the device (5) for feeding said waste (D) to said reactor (1):
- a first cooling of its thickness and of its outside surface (50), designed to protect it from corrosion; and
- a second cooling of its inside surface (50'), designed to minimize the heat transferred to the incoming waste (D).

4. The method according to claim 2 or claim 3, **characterized in that** said walls (3, 3') of said reactor (1) in contact with said gas phase (G) and/or said means (5, 6) introduced into said reactor (1) in contact with said gas phase (G) are cooled by circulation of at least one cooling fluid maintained at a temperature that is higher than the dew point of said gas phase (G).

5. The method according to any one of claims 1 to 4, **characterized in that** said bath of glass (V) is heated by induction, by flame, by plasma torch, or by means of electrodes dipped therein.

6. The method according to any one of claims 1 to 5, **characterized in that** it is implemented in a cold crucible heated by induction.

7. The method according to any one of claims 1 to 6, **characterized in that** it is implemented to process radioactive waste.

8. An apparatus for processing organic waste (D) in divided solid and/or liquid form by incineration and by vitrification, the apparatus comprising a reactor (1) associated with heater means (2) suitable for maintaining a bath of molten glass (V) in the bottom of said reactor (1), and fitted with:
- means (4) for emptying out said bath of molten glass (V);
- a device (5) for feeding said waste (D) to be incinerated and vitrified, said device (5) opening out above the surface (S) of said bath of molten glass (V);
- means (6) for feeding oxygen or oxygen-containing gas, delivering said oxygen or said gas above the surface (S) of said bath of molten glass (V); and
- at least one combustion gas outlet (7) provided in the top portion of said reactor (1) well above the surface (S) of said bath of molten glass (V);
the apparatus being **characterized in that** said reactor (1) is further equipped with means (8) for injecting oxygen or oxygen-containing gas into said bath of molten glass (V); said means (8) for injecting said oxygen or said gas into said bath of molten glass (V):
being vertically arranged, passing through the bottom of said reactor (1) and presenting an outlet (82) at 90° to their vertical axis, so that on ceasing their feeding, no plug of glass forms at their open end ; and
including at least one circuit (83 + 83') for circulating a cooling fluid within their structure.

9. The apparatus according to claim 8, **characterized in that** the means introduced into said reactor (1), other than said means (8) for injecting said oxygen or said gas into said bath of molten glass (V), including said device (5) for feeding said waste (D) and said means (6) for feeding oxygen or oxygen-containing gas include at least one circuit (51, 52; 61) for circulating a cooling fluid within their structure.

10. The apparatus according to claim 9, **characterized in that** said device (5) for feeding said waste (D) presents a structure that is tubular, being defined by an outside surface (50) and by an inside surface (50'), said structure including in the thickness thereof at least two circuits (51 and 52) for circulating cooling fluids, at least one (51) of said circuits (51, 52) being designed to cool said thickness and said outside surface (50) of said feeder device (5), and at least another (52) one of said circuits (51,52) being designed to cool said inside surface (50') of said feeder device (5).

11. The apparatus according to any one of claims 8 to 10, **characterized in that** the walls (3, 3') of said reactor (1) are of the double-walled type, to allow a cooling fluid to circulate.

12. The apparatus according to any one of claims 8 to 11, **characterized in that** said reactor (1) is a cold crucible, and **in that** said heater means (2) are means for induction heating.

## Patentansprüche

1. Verfahren zur Behandlung von teilchenförmigen festen und/oder flüssigen organischen Abfällen (D), die in einen neuartigen Reaktor (1) eingeführt werden, der ein Bad aus geschmolzenem Glas (V) enthält, oberhalb dessen sich eine Gasphase (G) befindet, wobei das Verfahren umfasst die Verbrennung der Abfälle (D) in Gegenwart von Sauerstoff an der Oberfläche (S) des Bades aus geschmolzenem Glas (V) und die Vitrifikation der verbrannten Abfälle (D) in dem Bad aus geschmolzenem Glas (V),
**dadurch gekennzeichnet, dass** zusätzlich zu dem Sauerstoff oder zu dem Sauerstoff enthaltenden Gas, der (das) als Sauerstoffträger in die Gasphase (G) eingeführt wird, Sauerstoff oder ein Sauerstoff enthaltendes Gas in das Bad aus geschmolzenem Glas (V) in einer Menge eingeführt wird, die ausreicht, um die Bildung von Metall im Innern des Bades aus geschmolzenem Glas (V) zu minimieren oder sogar zu vermeiden und um in vorteilhafter Weise außerdem ein mäßiges Rühren des Bades aus geschmolzenem Glas (V) zu gewährleisten, wobei die Einrichtungen (8), die für die genannte Einleitung verwendet werden, die gekühlt und vertikal angeordnet sind, den Boden des Reaktors (1) durchqueren und eine Eintrittsöffnung bzw. Einmündung (82) unter einem Winkel von 90 ° gegenüber ihrer vertikalen Achse aufweisen, sodass beim Abstoppen der Einleitung diese an ihrem Eintrittsende keinen Glaspfropfen entstehen lassen.

2. Verfahren nach Anspruch 1, **dadurch gekennzeichnet, dass** es durchgeführt wird unter Kühlen der Wände (3,3') des Reaktors (1) und/oder von Einrichtungen (5,6), die von den genannten Einrichtungen (8) zur Einleitung von Sauerstoff oder eines Sauerstoff enthaltenden Gases in das Bad aus geschmolzenem Glas (V) verschieden sind, die in den Reaktor (1) im Bereich der Gasphase (G) und des Bades aus geschmolzenem Glas (V) eingeführt werden, um insbesondere die Abfälle (D) und den Sauerstoffträger in den Reaktor (1) einzuführen.

3. Verfahren nach Anspruch 2, **dadurch gekennzeichnet, dass** es durchgeführt wird unter doppelter Kühlung der Einrichtung (5) zur Einführung der Abfälle (D) in den Reaktor (1):
- einer ersten Kühlung ihrer Masse und ihrer äußeren Oberfläche (50), um sie gegen Korrosion zu schützen, und
- einer zweiten Kühlung ihrer inneren Oberfläche (50'), um die mit den eintretenden Abfällen (D) zugeführte Wärmemenge zu minimieren.

4. Verfahren nach einem der Ansprüche 2 oder 3, **dadurch gekennzeichnet, dass** die Wände (3,3') des Reaktors (1) im Kontakt mit der Gasphase (G) und/oder die Einrichtungen (5,6), die in den Reaktor (1) eingeführt werden, im Kontakt mit der Gasphase (G) gekühlt werden durch Zirkulierenlassen mindestens eines Wärmeübertragungsfluids, das bei einer Temperatur oberhalb des Taupunktes der Gasphase (G) gehalten wird.

5. Verfahren nach einem der Ansprüche 1 bis 4, **dadurch gekennzeichnet, dass** das Bad aus geschmolzenem Glas (V) erwärmt wird durch Induktion, mit einer Flamme, mit einem Plasmabrenner oder mittels eingetauchter Elektroden.

6. Verfahren nach einem der Ansprüche 1 bis 5, **dadurch gekennzeichnet, dass** es in einem kalten Tiegel durchgeführt wird, der durch Induktion erwärmt wird.

7. Verfahren nach einem der Ansprüche 1 bis 6, **dadurch gekennzeichnet, dass** es durchgeführt wird zur Behandlung von radioaktiven Abfällen.

8. Vorrichtung zum Behandeln von teilchenförmigen festen und/oder flüssigen organischen Abfällen (D) durch Verbrennen und Vitrifizieren, die umfasst einen Reaktor (1) der mit Heizeinrichtungen (2) ausgestattet ist, die in der Lage sind, am Boden des Reaktors (1) ein Bad aus geschmolzenem Glas (V) aufrechtzuerhalten, und die ausgestattet ist mit:
- Einrichtungen (4) zum Abziehen des Bades aus geschmolzenem Glas (V),
- eine Einrichtung (5) zur Einführung der zu verbrennenden und zu vitrifizierenden Abfälle (D), wobei die Einrichtung (5) oberhalb der Oberfläche (S) des Bades aus geschmolzenem Glas (V) mündet,
- Einrichtungen (6) zur Einführung von Sauerstoff oder eines Sauerstoff enthaltenden Gases, die den Sauerstoff oder das Sauerstoff enthaltende Gas oberhalb der Oberfläche (S) des Bades aus geschmolzenem Glas (V) einleiten,
- mindestens einen Auslass (7) für Verbrennungsgase, der in dem oberen Abschnitt des Reaktors (1) weit oberhalb der Oberfläche (S) des Bades aus geschmolzenem Glas (V) angeordnet ist,
**dadurch gekennzeichnet, dass** der Reaktor (1) außerdem mit Einrichtungen (8) zur Einleitung von Sauerstoff oder eines Sauerstoff enthaltenden Gases in das Bad aus geschmolzenem Glas (V) ausgestattet ist, wobei die Einrichtungen (8) zum Einleiten des Sauerstoffs oder des Gases in das Bad aus geschmolzenem Glas (V)
- vertikal angeordnet sind, den Boden des Reaktors (1) durchqueren und eine Einmündung (82) unter einem Winkel von 90 ° gegenüber ihrer vertikalen Achse aufweisen, sodass beim Abstoppen der Einleitung an ihrem Einmündungsende sich kein Glaspfropfen bildet, und
- in ihrer Struktur mindestens einen Zirkulationskreislauf (83 + 83') für ein Wärmeübertragungsfluid aufweisen.

9. Vorrichtung nach Anspruch 8, **dadurch gekennzeichnet, dass** die Einführungseinrichtungen in den Reaktor (1), die von den Einrichtungen (8) zur Einleitung des Sauerstoffs oder des Gases in das Bad aus geschmolzenem Glas (V) verschieden sind, welche die Einrichtung (5) zur Einleitung der Abfälle (D) und die Einrichtungen (6) zur Einführung von Sauerstoff oder eines Sauerstoff enthaltenden Gases umfassen in ihrer Struktur mindestens einen Zirkulationskreislauf (51, 52; 61) eines Wärmeübertragungsfluids aufweisen.

10. Vorrichtung nach Anspruch 9, **dadurch gekennzeichnet, dass** die Einrichtung (5) zur Einführung der Abfälle (D) eine rohrförmige Struktur aufweist, die von einer äußeren Oberfläche (50) und einer inneren Oberfläche (50') begrenzt ist; wobei diese Struktur in ihrer Masse mindestens zwei Zirkulationskreisläufe (51 und 52) für Wärmeübertragungsfluids aufweist, wobei mindestens einer (51) der Kreisläufe (51 und 52) dazu bestimmt ist, die Kühlung der Masse und der äußeren Oberfläche (50) der Zuführungseinrichtung (5) zu gewährleisten und mindestens ein weiterer (52) der Kreisläufe (51 und 52) dazu bestimmt ist, die Kühlung der inneren Oberfläche (50') der Zuführungseinrichtung (5) zu gewährleisten.

11. Vorrichtung nach einem der Ansprüche 8 bis 10, **dadurch gekennzeichnet, dass** die Wände (3, 3') des Reaktors (1) solche vom Doppelwand-Typ sind, um die Zirkulation eines Wärmeübertragungsfluids zu ermöglichen.

12. Vorrichtung nach einem der Ansprüche 8 bis 11, **dadurch gekennzeichnet, dass** der Reaktor (1) ein kalter Tiegel ist und dass die Heizeinrichtungen (2) Induktions-Heizeinrichtungen sind.
